# EUROPEAN PATENT SPECIFICATION

(11) **EP 3 399 702 B1**
(45) Date of publication and mention of the grant of the patent: **01.01.2020**
(21) Application number: 16852880.0
(22) Date of filing: 10.08.2016
(51) Int. Cl.: H04L 12/28, G05B 15/02, G06F 3/01, G06F 3/0346, H04W 76/10

(54) **HOME CONTROL USING A SMART-WATCH**
HEIMSTEUERUNG MIT EINER INTELLIGENTEN UHR
COMMANDE À DOMICILE À L'AIDE D'UNE MONTRE INTELLIGENTE

(30) Priority: 29.12.2015 CN 201511029251
(43) Date of publication of application: 07.11.2018
(73) Proprietor: Huizhou TCL Mobile Communication Co., Ltd., Huizhou, Guangdong 516006 (CN)
(72) Inventor: ZHOU, Libin, Huizhou City Guangdong 516006 (CN)
(74) Representative: ZHAOffice SPRL
(86) International application number: PCT/CN2016/094452
(87) International publication number: WO 2017/113807

(56) References cited:
- WO-A1-2006/068357
- WO-A1-2015/163674
- CN-A- 104 155 897
- CN-A- 104 898 473
- CN-A- 105 135 611
- CN-A- 105 467 852
- CN-U- 203 950 271
- KR-A- 20150 082 079
- US-A1- 2015 145 653
- US-A1- 2015 312 398

## Description

### FIELD

This disclosure generally relates to the field of intelligent wearable devices, and more particularly, to a method of controlling smart homes based on using smart watches and the smart watches thereof

### BACKGROUND

With the continuous development of smart watch technology, the research and development of the smart watch functions is also constantly improving to meet the various needs of users. Meanwhile, smart homes have been increasingly integrated into the people's daily life. Consequently, there is a growing interest and need to use a person's smart watch to control that person's smart home.

Korean patent application KR20150082079A discloses a method for controlling a home device, more specifically, a method of utilizing a user interface, a method of utilizing a voice, and a method of utilizing a gesture such as a wrist snap utilizing a wearable device.

US patent application US2015312398A1 discloses an apparatus and method for automatic discovery and suggesting personalized gestures from mobile terminal to control a plurality of devices in smart home system, based on user's habit and context. The method includes recording, via a mobile terminal, a context of the mobile terminal, recoding, via home system, actions taken by the plurality of devices in the home system, recognizing as a gesture command from a correlation of at least a portion of the recorded context of the user's mobile terminal with the recorded actions taken by the plurality of devices in the home system, and controlling at least one of the plurality of devices based a repetition of the gesture command, the controlling repeating the actions taken by the at least one of the plurality of devices in the home system.

### SUMMARY

The present invention is defined in the appended independent claims to which reference should be made. Advantageous features are set out in the appended dependent claims.

Advantages of the disclosed techniques and devices can include the following. The present disclosure provides techniques for controlling smart homes based on using smart watches. More specifically, after a smart watch worn by a user enters the sensing range of a smart home, the smart watch establishes a wireless connection with the smart home and turns on the smart-home-control function. Using the smart-home-control function, the smart watch is able to recognize various hand gestures of the user and control the smart home through the wireless connection to switch current working state of the smart home based on the recognized hand gestures of the user. The proposed techniques and devices can realize the control of smart home via recognizing hand gestures of users using smart watches worn by the users, thereby meeting the needs of the users.

### BRIEF DESCRIPTION OF THE DRAWINGS

FIG. 1 is a flow diagram illustrating a method of controlling smart homes based on using smart watches according to an embodiment of the disclosure.
FIG. 2 is a flow diagram illustrating a detailed embodiment for recognizing the user's hand gesture according to the embodiment as illustrated in FIG. 1.
FIG. 3 is a block diagram of the disclosed smart watch according to an embodiment of the disclosure.
FIG. 4 is a block diagram of the disclosed smart watch or an equivalent device according to another embodiment of the disclosure.

### DETAILED DESCRIPTION

Certain terms are used in the detailed description and claims to refer to specific components, and those skilled in the art will appreciate that different terms may be used by the manufacturer to refer to the same components. The present specification and claims do not use the difference in the terms given to the components as a means of distinguishing components, but rather the functional differences of the components as a basis to distinguish different components.

The subject technology will now be described in detail with reference to the accompanying drawings and exemplary embodiments.

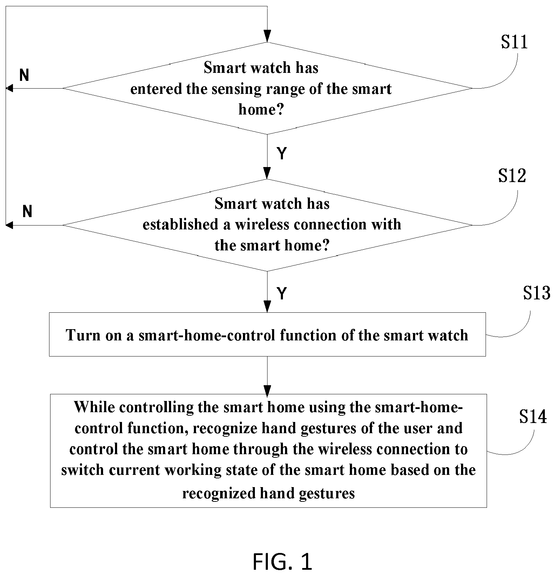

FIG. 1 is a flow diagram illustrating a method of controlling smart homes based on using smart watches according to an embodiment of the disclosure. Note that the blocks of the exemplary process shown in FIG. 1 may be performed in a different order than the order shown and/or one or more of the blocks of the exemplary process in FIG. 1 may be omitted in some embodiments. As shown in FIG. 1, the exemplary process can include the following blocks.

In block S11 , whether a smart watch has entered the sensing range of a smart home is detected, and if so, block S12 may be executed. If not, block S11 may be repeated.

In some embodiments, detecting whether the smart watch has entered the sensing range of the smart home may further include the following blocks: acquiring the position of the smart home and marking the acquired position as the reference position; obtaining the position of the smart watch, for example, the position of the smart watch can be obtained via the GPS positioning module integrated with the smart watch; computing a distance between the position of the smart watch and the reference position and determining whether the distance is within the sensing range of the smart home.

In block S12, whether the smart watch has established a wireless connection with the smart home may be detected, and if so, block S13 may be executed. If not, block 11 may be executed.

In some embodiments of block S12, after the smart watch and smart home have established a wireless connection, the smart watch and the smart home can perform data communication. In some embodiments, the wireless connection can include, but are not limited to a Wi-Fi connection, a Bluetooth® connection, and an infrared connection.

In block S13, a smart-home-control function of the smart watch may be turned on. In some embodiments of block S13, after the smart watch and the smart home have established the wireless connection, the smart watch automatically turns on the smart-home-control function. In other embodiments, after the smart watch and the smart home have established the wireless connection, the smart home sends a request to turn on the smart-home-control function through the wireless connection. Next, after the smart watch has acknowledged the request of the smart home, the smart-home-control function is then turned on.

In block S14, while controlling the smart home using the smart-home-control function, the smart watch may be configured to recognize a hand gesture of the user and control the smart home through the wireless connection to switch current working state of the smart home based on the recognized hand gesture of the user.

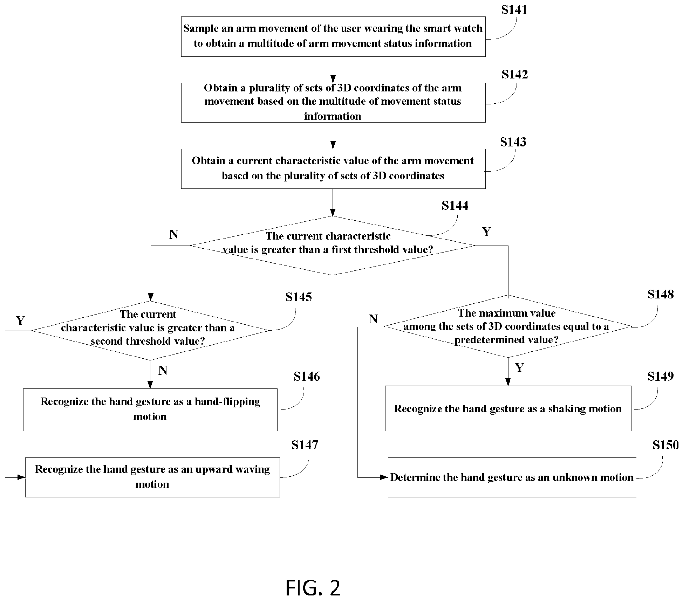

Now turning to FIG. 2, is a flow diagram illustrating a detailed embodiment for recognizing the user's hand gesture according to the embodiment as illustrated in FIG. 1. As shown in FIG. 2, the exemplary process can include the following blocks.

In block S141, an arm movement of the user wearing the smart watch maybe sampled to obtain a multitude of arm movement status information. In some embodiments of block S141, because the smart watch may be generally worn on the user's arm, when the user's arm moves to make a different gesture, the arm movement status information of the user can be obtained by using an accelerometer and a gyroscope within the smart watch, wherein the arm movement status information may include an acceleration and an angular velocity of the arm movement. In other words, a plurality of sets of data can be measured within a predetermined time interval to obtain the arm movement status information corresponding to a plurality of points of time within the predetermined time interval.

In block S142, a plurality of sets of three-dimensional (3D) coordinates of the arm movement may be obtained based on the multitude of movement status information.

In one embodiment of block S142, a corresponding 3D coordinate of the arm may be obtained based on the arm movement status information corresponding to each point of time, thus a plurality of sets of 3D coordinates of the arm movement may be obtained.

In block S143, a current characteristic value of the arm movement may be obtained based on the plurality of sets of 3D coordinates. It can be appreciated that, because the characteristic information, i.e., the current characteristic value expressed in the arm movement status information obtained by the accelerometer and the gyroscope sampling may be different for different hand gestures, it is necessary to compute the current characteristic value of the arm movement based on the multiple sets of 3D coordinates and subsequently recognize the hand gesture of the user based on the obtained current characteristic value.

In block S144, whether the current characteristic value is greater than a first threshold value may be determined. If not, block S145 may be executed. Otherwise, block S148 may be executed.

In block S145, whether the current characteristic value is greater than a second threshold value may be determined. If not, block S146 may be executed. Otherwise, the block S147 may be executed.

In some embodiments, the second threshold value may be smaller than the first threshold value, and the values of the first threshold value and the second threshold value can be determined based on the actual situation. In one embodiment, when the second threshold value may be set to be close to the first threshold value, e.g., the first threshold value is set to 10 and the second threshold value is set to 8 an upward waving motion of the hand gesture can be more accurately recognized.

In block S146, the hand gesture may be recognized as a hand-flipping motion. More specifically in block S146, when the current characteristic value is less than or equal to the second threshold value, the hand gesture may be determined to be a hand-flipping motion.

In block S147, the hand gesture may be recognized as an upward waving motion. More specifically in block S147, when the current characteristic value is greater than the second threshold value but smaller than or equal to the first threshold value, the hand gesture may be determined to be an upward waving motion.

In block S148, whether the maximum value among the multiple sets of 3D coordinates is equal to a predetermined value may be determined. If so, block S 149 may be executed. Otherwise, block S150 may be executed.

In some embodiments in block S148, when it is determined in block S144 that the current characteristic value is greater than the first threshold value, whether the maximum value among the multiple sets of 3D coordinates is equal to the predetermined value may be further determined. In some embodiments, the maximum value among the multiple sets of 3D coordinates can be the maximum value of the distances between the multiple sets of 3D coordinates and the origin of the coordinates.

In block S149, the hand gesture may be recognized as a shaking motion. More specifically, when the current characteristic value is greater than the first threshold value and the maximum value among the multiple sets of 3D coordinates is equal to the predetermined value, the hand gesture may be determined to be a shaking motion.

In block S150, the hand gesture is determined as an unknown motion. More specifically, when the current characteristic value is greater than the first threshold value and the maximum value among the multiple sets of 3D coordinates is not equal to the predetermined value, the hand gesture may be determined to be an unknown motion.

In some embodiments, when the smart watch recognizes the hand gesture of the user, the recognized hand gesture may be encoded into a command for switching the current working state of the smart home and transmits the command to the smart home via the wireless connection. After receiving the command, the smart home switches the current working state according to the command.

In some embodiments, because an upward waving motion of the hand gesture can be more accurately recognized than a hand-flipping motion or a shaking motion, it is preferable that after the smart watch recognizes an upward waving motion of the user's hand gesture, the smart watch may control the smart home to switch the current operating state based on the recognized upward waving motion.

In some embodiments, after the smart watch has left the sensing range of the smart home, the smart watch may disconnect the wireless connection from the smart home and turns off the smart-home-control function, thereby achieving power-saving of the smart watch.

The following is a specific example to illustrate the proposed smart home control technique. It is assumed that the user's living room is equipped with smart lights. When the user wearing a smart watch enters the living room and the sensing range of the smart lights, the smart watch may establish a wireless connection with the smart light and subsequently turns on the smart home control function. Next, when the smart watch recognizes an upward waving motion of the user's hand gesture, the smart watch may be configured to control the smart light to switch a current working state based on the recognized upward waving motion. More specifically, when the user waves the hand upward, the smart lights may be switched on; when the user waves again, the smart lights may be switched off. When the user leaves the living room and the sensing range of the smart lights, the smart watch may be configured to turn off the wireless connection with the smart lights, and switch off the smart-home-control function.

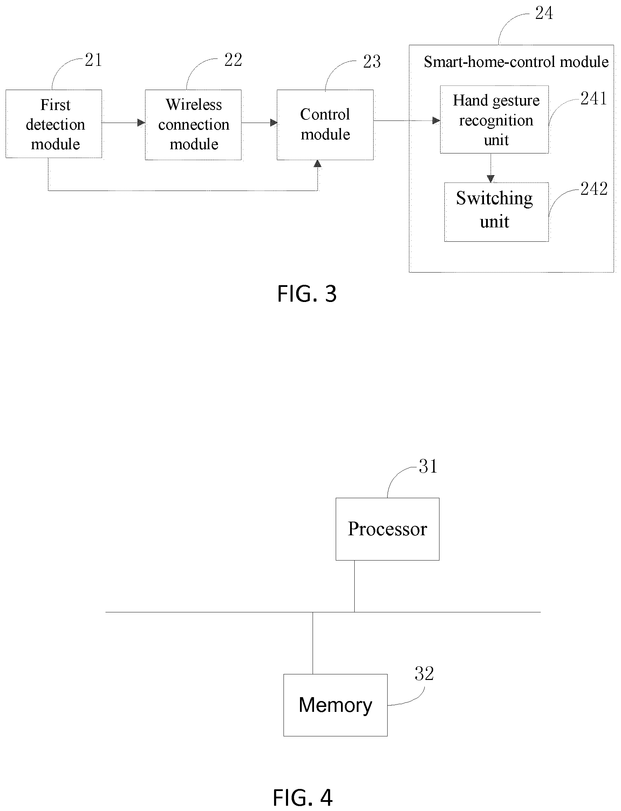

FIG. 3 is a functional block diagram of the disclosed smart watch according to an embodiment of the disclosure. As can be seen in FIG. 3, the smart watch may include a first detection module 21, a wireless connection module 22, a control module 23, and a smart-home-control module 24.

In some embodiments, the first detection module 21, which resides within the smart watch, may be configured to detect whether the smart watch has entered a sensing range of the smart home.

In some embodiments, the wireless connection module 22, which resides within the smart watch and is coupled to first detection module 21, may be configured to establish a wireless connection between the smart watch and the smart home after the first detection module 21 detects that the smart watch has entered the sensing range of the smart home. In some embodiments, the wireless connection module 22 may be further configured to disconnect the wireless connection between the smart watch and the smart home after the first detection module 21 detects that the smart watch has left the sensing range of the smart home. In some embodiments, the wireless connection can include, but are not limited to a Wi-Fi connection, a Bluetooth® connection, and an infrared connection.

In some embodiments, control module 23 may be coupled with the wireless connection module 22 and configured to control the smart-home-control module 24 to turn on the smart-home-control function after the wireless connection module 22 has established the wireless connection between the smart watch and the smart home. Furthermore, the control module 23 may be coupled to first detection module 21 and configured to control the smart-home-control module 24 to turn off the smart-home-control function after the first detection module 21 detects that the smart watch has left the sensing range the smart home.

In some embodiments, the smart-home-control module 24 may further include a hand gesture recognition unit 241 and a switching unit 242. The hand gesture recognition unit 241 may be coupled to control module 23 for recognizing hand gestures of the user. The switching unit 242 may be coupled to the hand gesture recognition unit 241 for controlling the smart home through the wireless connection to switch current working state of the smart home based on the recognized hand gestures of the user.

In some embodiments, the hand gesture recognition unit 241 may be configured to recognize the hand gestures of the user by: sampling an arm movement of the user to obtain a multitude of movement status information by using an accelerometer and a gyroscope within the smart watch, wherein the multitude of movement status information may include an acceleration and an angular velocity of the arm movement; obtaining a plurality of sets of 3D coordinates of the arm movement based on the multitude of movement status information; obtaining a current characteristic value of the arm movement based on the plurality of sets of 3D coordinates; and recognizing the hand gesture of the user based on the current characteristic value.

In some embodiments, the hand gesture recognition unit 241 may recognize the hand gesture of the user based on the current characteristic value by: detecting whether the current characteristic value is greater than a first threshold value; if the current characteristic value is less than or equal to the first threshold value, further detecting whether the current characteristic value is greater than a second threshold value; if the current characteristic value is greater than the second threshold value, determining that the hand gesture may be an upward waving motion; and if the current characteristic value is less than or equal to the second threshold value, determining that the hand gesture may be a hand-flipping motion.

In some embodiments, the hand gesture recognition unit 241 recognizing the hand gesture of the user based on the current characteristic value may further include: when the current characteristic value is detected to be greater than the first threshold value, further detecting whether the maximum value among the sets of 3D coordinates is equal to a predetermined value; if the maximum value is equal to the predetermined value, determining that the hand gesture may be a shaking motion; and if the maximum value is not equal to the predetermined value, determining that the hand gesture may be an unknown motion.

In some embodiments, the switching unit 242 controlling the smart home through the wireless connection to switch current working state of the smart home based on the recognized hand gestures of the user may include: when the hand gesture recognition unit 241 recognizes the hand gesture of the user, encoding the recognized hand gesture into a command for switching the current working state of the smart home and transmits the command to the smart home via the wireless connection, thereby causing the smart home to switch the current working state according to the received command.

Advantages of the disclosed techniques and devices can include the following. The present disclosure provides techniques for controlling smart homes based on using smart watches. More specifically, after a smart watch worn by a user enters the sensing range of a smart home, the smart watch establishes a wireless connection with the smart home and turns on the smart-home-control function. Using the smart-home-control function, the smart watch is able to recognize various hand gestures of the user and control the smart home through the wireless connection to switch current working state of the smart home based on the recognized hand gestures of the user. The proposed techniques and devices can realize the control of smart home via recognizing hand gestures of users using smart watches worn by the users, thereby meeting the needs of the users.

FIG. 4 is a block diagram of the disclosed smart watch or an equivalent device according to another embodiment of the disclosure. The smart watch or the equivalent device described in FIG. 4 can be used to perform the steps in the above-described processes, the details of which are described in the above-described processes in conjunction with FIGs. 1 and 2.

As can be seen in FIG. 4, the disclosed device may include a processor 31 and a memory 32 coupled to the processor 31. In some embodiments, the memory 32 may be used to store program instructions, the first threshold value, and the second threshold value.

In some embodiments, the processor 31 may be configured to execute the program instructions to achieve the following functions: detecting whether the smart watch has entered a sensing range of the smart home; after the smart watch has entered the sensing range of the smart home, detecting whether the smart watch has established a wireless connection with the smart home; after the smart watch has established the wireless connection with the smart home, turning on a smart-home-control function of the smart watch; and while controlling the smart home using the smart-home-control function, the processor 31 recognizing hand gestures of the user and controlling the smart home through the wireless connection to switch current working state of the smart home based on the recognized hand gestures of the user.

In some embodiments, the processor 31 may be further configured to: sample an arm movement of the user to obtain a multitude of movement status information, wherein the multitude of movement status information includes an acceleration and an angular velocity of the arm movement; obtain a plurality of sets of 3D coordinates of the arm movement based on the multitude of movement status information; obtain a current characteristic value of the arm movement based on the plurality of sets of 3D coordinates; and recognize a hand gesture of the user based on the current characteristic value.

In some embodiments, the processor 31 recognizing the hand gesture of the user based on the current characteristic value may include: detecting whether the current characteristic value is greater than a first threshold value; if the current characteristic value is less than or equal to the first threshold value, further detecting whether the current characteristic value is greater than a second threshold value; if the current characteristic value is greater than the second threshold value, determining that the hand gesture may be an upward waving motion; and if the current characteristic value is less than or equal to the second threshold value, determining that the hand gesture may be a hand-flipping motion.

In some embodiments, the processor 31 recognizing the hand gesture of the user based on the current characteristic value may further include: when the current characteristic value is determined to be greater than the first threshold value, further detecting whether the maximum value among the sets of 3D coordinates is equal to a predetermined value; and if the maximum value is equal to the predetermined value, determining that the hand gesture may be a shaking motion.

In some embodiments, the processor 31 may be further configured to turn off the smart-home-control function of the smart watch when the smart watch has exited the sensing range of the smart home.

In the embodiments of the present disclosure, it should be understood that the disclosed systems, devices, and techniques may be implemented in other ways. For example, the embodiments of the described systems and devices are merely for illustrative purposes. For example, the disclosed partitions of the disclosed modules and units merely include logical functional partitions, and the actual implementations can include other partition schemes. For example, multiple units or components may be integrated into another system, or some features may be omitted or may not be performed. In another embodiment, the illustrated or discussed mutual coupling, direct coupling or communication connection as described above may be an indirect coupling or a communication connection via one or more interfaces, devices, or units, and may be in an electrical form, a mechanical form, or other forms.

The units described as individual components may or may not be physically separated, and the components displayed as units may or may not be physical units; that is, the components displayed as units may be located in one place or may be distributed over a plurality of network units. Some or all of the units may be selected according to actual needs to achieve the purpose of the one or more embodiments of the present disclosure.

In addition, each functional unit in each embodiment of the present disclosure may be integrated in one processing unit, or each functional unit may exist as a discrete physical unit, or two or more units may be integrated into one unit. The above-mentioned integrated unit can be implemented in the form of hardware or in the form of a functional software unit.

The integrated unit as described above may be stored in a computer-readable storage medium if the integrated unit is implemented in the form of a functional software unit and sold or used as a standalone product. Based on this understanding, a technical solution disclosed in the present disclosure, a part of the technical solution which contributes to the state of the art, or the technical solution either in part or as a whole, can be embodied in the form of a software product that can be stored in a storage medium. The storage medium may include one or more instructions to enable a computing device (e.g., a personal computer, a server, or a network device) or a processor to perform all or parts of the processes as described in the one or more embodiments of the present disclosure. The storage medium as described above may include a USB flash drive, a removable hard disk, a ROM (Read-Only Memory), a random access memory (RAM), a magnetic disk, an optical disk, and other medium which can store program codes.

## Claims

1. A smart watch for controlling a smart home, comprising:
a processor (31); and
a memory (32) coupled to the processor (31) and configured to store program instructions,
wherein the processor (31) is configured to execute the program instructions to:
detect whether the smart watch has entered a sensing range of the smart home;
detect whether the smart watch has established a wireless connection with the smart home after the smart watch has entered the sensing range of the smart home;
turn on a smart-home-control function of the smart watch after the smart watch has established the wireless connection with the smart home; and
wherein the smart-home-control function comprises using the processor (31) to:
recognize hand gestures of a user wearing the smart watch ; and
control the smart home through the wireless connection to switch current working state of the smart home based on the recognized hand gestures of the user;
wherein the using the processor to detect whether the smart watch has entered a sensing range of the smart home comprises: acquiring the position of the smart home and marking the acquired position as the reference position;
obtaining the position of the smart watch; computing a distance between the position of the smart watch and the reference position and determining whether the distance is within the sensing range of the smart home;
wherein the using the processor (31) to recognize the hand gestures of the user comprises: sampling an arm movement of the user to obtain a multitude of movement status information, wherein the multitude of movement status information comprises an acceleration and an angular velocity of the arm movement; obtaining a plurality of sets of three-dimensional, 3D, coordinates of the arm movement based on the multitude of movement status information;
obtaining a current characteristic value of the arm movement based on the plurality of sets of 3D coordinates; and recognizing a hand gesture of the user associated with the arm movement based on the current characteristic value; the smart watch
**characterized in that** the using the processor (31) to recognize the hand gesture of the user based on the current characteristic value comprises: detecting whether the current characteristic value is greater than a first threshold value; when the current characteristic value is less than or equal to the first threshold value, further detecting whether the current characteristic value is greater than a second threshold value; when the current characteristic value is greater than the second threshold value, determining that the hand gesture is an upward waving motion; and when the current characteristic value is less than or equal to the second threshold value, determining that the hand gesture is a hand-flipping motion.

2. The smart watch according to claim 1, wherein the using the processor (31) to recognize the hand gesture of the user based on the current characteristic value further comprises:
when the current characteristic value is determined to be greater than the first threshold value, further detecting whether the maximum value among the sets of 3D coordinates is equal to a predetermined value; and
when the maximum value is equal to the predetermined value, determining that the hand gesture is a shaking motion.

3. The smart watch according to any one of the foregoing claims, wherein the processor (31) is further configured to turn off the smart-home-control function of the smart watch when the smart watch has exited the sensing range of the smart home.

4. A method for controlling a smart home based on a smart watch, the method comprising:
detecting whether the smart watch has entered a sensing range of the smart home;
detecting, after the smart watch has entered the sensing range of the smart home, whether the smart watch has established a wireless connection with the smart home;
turning on a smart-home-control function of the smart watch after the smart watch has established the wireless connection with the smart home; and
controlling the smart home using the smart-home-control function, which further comprises:
recognizing hand gestures of a user wearing the smart watch; and
controlling the smart home through the wireless connection to switch current working state of the smart home based on the recognized hand gestures of the user;
wherein the detecting whether the smart watch has entered a sensing range of the smart home comprises: acquiring the position of the smart home and marking the acquired position as the reference position; obtaining the position of the smart watch;
computing a distance between the position of the smart watch and the reference position and determining whether the distance is within the sensing range of the smart home;
wherein the recognizing the hand gestures of the user using the smart watch comprises: sampling an arm movement of the user to obtain a multitude of movement status information, wherein the multitude of movement status information comprises an acceleration and an angular velocity of the arm movement;
obtaining a plurality of sets of three-dimensional, 3D, coordinates of the arm movement based on the multitude of movement status information; obtaining a current characteristic value of the arm movement based on the plurality of sets of 3D coordinates; and
recognizing a hand gesture of the user associated with the arm movement based on the current characteristic value; the method
**characterized in that** the recognizing the hand gesture of the user based on the current characteristic value comprises: detecting whether the current characteristic value is greater than a first threshold value; when the current characteristic value is less than or equal to the first threshold value, further detecting whether the current characteristic value is greater than a second threshold value; when the current characteristic value is greater than the second threshold value, determining that the hand gesture is an upward waving motion; and when the current characteristic value is less than or equal to the second threshold value, determining that the hand gesture is a hand-flipping motion.

5. The method according to claim 4, further comprising:
when the current characteristic value is greater than the first threshold value, detecting whether the maximum value among the multiple sets of 3D coordinates is equal to a predetermined value; and
when the maximum value is equal to the predetermined value, determining that the hand gesture is a shaking motion.

6. The method according to claim 4 or 5, further comprising turning off the smart-home-control function of the smart watch when the smart watch has exited the sensing range of the smart home.

7. The method according to claim 4, wherein the position of the smart watch is obtained via a GPS positioning module integrated with the smart watch.

## Patentansprüche

1. Intelligente Uhr zur Steuerung eines intelligenten Heimes, umfassend:
einen Prozessor (31); und
einen Speicher (32), der mit dem Prozessor gekoppelt ist und zur Speicherung von Programmbefehle konfiguriert ist,
wobei der Prozessor (31) zur Ausführung von Programmbefehlen konfiguriert ist, um:
zu erfassen, ob die intelligente Uhr einen Erfassungsbereich des intelligenten Heimes eingegeben hat;
zu erfassen, ob die intelligente Uhr eine drahtlose Verbindung mit dem intelligenten Heim hergestellt hat, nachdem die intelligente Uhr den Erfassungsbereich des intelligenten Heimes eingegeben hat;
eine Funktion der intelligenten Uhr zur Steuerung eines intelligenten Heimes einzuschalten, nachdem die intelligente Uhr die drahtlose Verbindung mit dem intelligenten Heim hergestellt hat; und
wobei die Funktion zur Steuerung eines intelligenten Heimes die Benutzung des Prozessors (31) umfasst, um:
Handgesten eines Benutzers, der eine intelligente Uhr trägt, zu erkennen; und das intelligente Heim über die drahtlose Verbindung zum Schalten des Betriebszustands des intelligenten Heimes auf Grund der erkannten Handgesten des Benutzers zu steuern;
wobei die Benutzung des Prozessors zur Erfassung, ob die intelligente Uhr einen Erfassungsbereich des intelligenten Heimes eingegeben hat, umfasst: die Erfassung der Position des intelligenten Heimes und die Markierung der erfassten Position als der Referenzposition; die Erzielung der Position der intelligenten Uhr; die Berechnung des Abstands zwischen der Position der intelligenten Uhr und der Referenzposition und die Bestimmung, ob der Abstand innerhalb des Erfassungsbereichs des intelligenten Heimes ist;
wobei die Benutzung des Prozessors (31) zur Erkennung der Handgesten des Benutzers umfasst: das Sampling einer Armbewegung des Benutzers zur Erzielung einer Vielzahl von Bewegungsstatusinformationen, wobei die Vielzahl von Bewegungsstatusinformationen eine Beschleunigung und eine Winkelgeschwindigkeit der Armbewegung umfasst; die Erzielung einer Vielfalt von Sätzen von dreidimensionalen, 3D-Koordinaten der Armbewegung auf Grund der Vielzahl von Bewegungsstatusinformationen; die Erzielung eines gegenwärtigen Kennwertes der Armbewegung auf Grund der Vielfalt der 3D-Koordinatensätze; und die Erkennung einer Handgeste des Benutzers, die mit der Armbewegung aufgrund des gegenwärtigen Kennwertes verbunden ist, wobei die Uhr **dadurch gekennzeichnet ist, dass** die Benutzung des Prozessors (31) zur Erkennung der Handgeste des Benutzers aufgrund des gegenwärtigen Kennwertes umfasst: die Erfassung, ob der gegenwärtige Kennwert größer als ein erster Schwellwert ist; wenn der gegenwärtige Kennwert niedriger oder gleich als der erste Schwellwert ist, die weitere Erfassung, ob der gegenwärtige Kennwert größer als ein zweiter Schwellwert ist; wenn der gegenwärtige Kennwert größer als der zweite Schwellwert ist, die Bestimmung, dass die Handgeste eine Aufwärtswinkbewegung ist; und wenn der gegenwärtige Kennwert kleiner oder gleich als der zweiter Schwellwert ist, Bestimmung, dass die Handgeste eine Handumdrehbewegung ist.

2. Intelligente Uhr nach Anspruch 1, wobei die Benutzung des Prozessors (31) zur Erkennung der Handgeste des Benutzers auf Grund der gegenwärtigen Kennwertes weiter umfasst:
wenn der gegenwärtige Kennwert als größer als der ersten Schwellewert bestimmt ist weiteres Erfassen, ob der Maximalwert unter den Sätzen von 3D-Koordinaten gleich einem vorbestimmten Wert ist; und
wenn der Maximalwert gleich dem vorbestimmten Wert ist, Bestimmen, dass die Handgeste eine Schüttelbewegung ist.

3. Intelligente Uhr nach einer der vorhergehenden Ansprüche, wobei der Prozessor (31) weiter zur Ausschaltung der Funktion der intelligenten Uhr zur Steuerung eines intelligenten Heimes, wenn die intelligente Uhr den Erfassungsbereich des intelligenten Heimes verlassen hat.

4. Verfahren zur Steuerung eines intelligenten Heimes auf Grund einer intelligenten Uhr, wobei das Verfahren umfasst:
Erfassen, ob die intelligente Uhr einen Erfassungsbereich des intelligenten Heimes eingegeben hat;
Erfassen, ob die intelligente Uhr eine drahtlose Verbindung mit dem intelligenten Heim hergestellt hat, nachdem die intelligente Uhr einen Erfassungsbereich des intelligenten Heimes eingegeben hat;
Einschalten einer Funktion der intelligenten Uhr zur Steuerung eines intelligenten Heimes, nachdem die intelligente Uhr die drahtlose Verbindung mit dem intelligenten Heim hergestellt hat; und Steuern des intelligenten Heimes, indem die Funktion zur Steuerung eines intelligenten Heimes benutzt wird, das weiter umfasst:
Erkennen von Handgesten eines Benutzers, der die intelligente Uhr trägt; und
Steuern des intelligenten Heimes über die drahtlose Verbindung zum Schalten des Betriebszustands des intelligenten Heimes auf Grund der erkannten Handgesten des Benutzers; wobei die Erfassung, ob die intelligente Uhr einen Erfassungsbereich des intelligenten Heimes eingegeben hat, umfasst: die Erfassung der Position des intelligenten Heimes und die Markierung der erfassten Position als der Referenzposition; Erzielung der Position der intelligenten Uhr; die Berechnung eines Abstands zwischen der Position der intelligenten Uhr und der Referenzposition und die Bestimmung, ob der Abstand innerhalb des Erfassungsbereichs des intelligenten Heimes ist;
wobei die Erkennung der Handgesten des Benutzers, der die intelligente Uhr benutzt, umfasst: die Auswahl einer Armbewegung des Benutzers zur Erzielung einer Vielzahl von Bewegungsstatusinformationen, wobei die Vielzahl von Bewegungsstatusinformationen eine Beschleunigung und eine Winkelgeschwindigkeit der Armbewegung umfasst; die Erzielung einer Vielfalt von Sätzen von dreidimensionalen, 3D-Koordinaten der Armbewegung auf Grund der Vielzahl von Bewegungsstatusinformationen; die Erzielung eines gegenwärtigen Kennwertes der Armbewegung aufgrund der Vielfalt von 3D-Koordinatensätzen; und Erkennung einer Handgeste des Benutzers, die mit der Armbewegung aufgrund des gegenwärtigen Kennwertes verbunden ist, wobei das Verfahren **dadurch gekennzeichnet ist, dass** die Benutzung des Prozessors (31) zur Erkennung der Handgeste des Benutzers auf Grund des gegenwärtigen Kennwertes umfasst: die Erfassung, ob der gegenwärtige Kennwert größer als ein erster Schwellewert ist; wenn der gegenwärtige Kennwert niedriger oder gleich als der erste Schwellewert ist, die weitere Erfassung, ob der gegenwärtige Kennwert größer als ein zweiter Schwellewert ist; wenn der gegenwärtige Kennwert größer als der zweite Schwellewert ist, die Bestimmung, dass die Hangeste eine Aufwärtswinbewegung ist; und wenn der gegenwärtige Kennwert kleiner oder gleich als der zweiter Schwellewert ist, Bestimmung, dass die Handgeste eine Handumdrehbewegung ist.

5. Verfahren nach Anspruch 4, weiter umfassend:
wenn der gegenwärtige Kennwert als größer als der ersten Schwellewert bestimmt ist weiteres Erfassen, ob der Maximalwert unter den Sätzen von 3D-Koordinaten gleich einem vorbestimmten Wert ist; und
wenn der Maximalwert gleich dem vorbestimmten Wert ist, Bestimmen, dass die Handgeste eine Schüttelbewegung ist.

6. Verfahren nach Anspruch 4 oder 5, weiter umfassend die Ausschaltung der Funktion der intelligenten Uhr zur Steuerung eines intelligenten Heimes, wenn die intelligente Uhr den Erfassungsbereich des intelligenten Heimes verlassen hat.

7. Verfahren nach Anspruch 4, wobei die Position der intelligenten Uhr über ein GPS-Positionierungsmodul, das in der intelligenten Uhr integriert ist, erzielt wird.

## Revendications

1. Montre intelligente apte à commander une maison intelligente, comprenant:
un processeur (31); et
une mémoire (32) couplée au processeur (31) et configurée pour stocker de instructions de programme,
dans laquelle le processeur (31) est configuré pour exécuter les instructions de programme afin de:
détecter si la montre intelligente a entré une portée de détection de la maison intelligente;
détecter si la montre intelligente a établi une connexion sans fil avec la maison intelligente après que la montre intelligente a entré la portée de détection de la maison intelligente;
activer une fonction de commande de maison intelligente après que la montre intelligente a établi la connexion sans fil avec la maison intelligente; et
dans laquelle la fonction de commande de maison intelligente comprend l'utilisation du processeur (31) afin de:
reconnaître des gestes de la main d'un utilisateur portant la montre intelligente; et afin de
commander la maison intelligente par l'intermédiaire de la connexion sans fil pour commuter l'état de fonctionnement courant de la maison intelligente sur base des gestes de la main reconnus de l'utilisateur;
dans laquelle l'utilisation du processeur afin de détecter si la montre intelligente a entré la portée de détection de la maison intelligente comprend: l'acquisition de la position de la maison intelligente et le marquage de la position acquise comme position de référence; l'obtention de la position de la montre intelligente; le calcul d'une distance entre la position de la montre intelligente et la position de référence et la détermination si la distance se trouve dans la portée de détection de la maison intelligente;
dans laquelle l'utilisation du processeur (31) afin de reconnaître des gestes de la main de l'utilisateur comprend: l'échantillonnage d'un mouvement de bras de l'utilisateur afin d'obtenir une multitude d'informations d'état de mouvement, où la multitude d'informations d'état de mouvement comprend une accélération et une vitesse angulaire du mouvement de bras, l'obtention d'une pluralité de jeux de coordonnées tridimensionnelles 3D sur base de la multitude d'informations d'état de mouvement; l'obtention d'une valeur caractéristique courante du mouvement de bras sur base de la pluralité de jeux de coordonnées 3D; et la reconnaissance d'un geste de la main de l'utilisateur associé au mouvement de bras basé sur la valeur caractéristique courante; la montre intelligente étant **caractérisée en ce que** l'utilisation du processeur (31) pour reconnaître le geste de la main de l'utilisateur sur base de la valeur caractéristique courante comprend: la détection quant à savoir si la valeur caractéristique courante est supérieure à une première valeur seuil; lorsque la valeur caractéristique courante est inférieure ou égale à la première valeur seuil, détecter en outre si la valeur caractéristique courante est supérieure à une deuxième valeur seuil ; lorsque la valeur caractéristique courante est supérieure à la deuxième valeur seuil, déterminer que le geste de la main est un mouvement d'agitation vers le haut; et lorsque la valeur caractéristique courante est inférieure ou égale à la deuxième valeur seuil, déterminer que le geste de la main est un mouvement de retournement de la main.

2. Montre intelligente selon la revendication 1, dans laquelle l'utilisation du processeur (31) afin de reconnaître le geste de la main de l'utilisateur sur base le la valeur caractéristique courante comprend en outre:
lorsque la valeur caractéristique courante est déterminée comme étant supérieure à la première valeur seuil, détecter en outre si la valeur maximale parmi les jeux de coordonnées 3D est égale à une valeur prédéterminée; et lorsque la valeur maximale est égale à la valeur prédéterminée, déterminer que le geste de la main est un mouvement de secouage.

3. Montre intelligente selon l'une quelconque des revendications précédentes, dans laquelle le processeur (31) est configuré en outre pour désactiver la fonction de commande de maison intelligente de la montre intelligente lorsque la montre intelligente a quitté la portée de détection de la maison intelligente.

4. Procédé de commande d'une maison intelligente basé sur une montre intelligente, le procédé comprenant les étapes de:
détecter si la montre intelligente a entré une portée de détection de la maison intelligente;
détecter si la montre intelligente a établi une connexion sans fil avec la maison intelligente après que la montre intelligente a entré la portée de détection de la maison intelligente;
activer une fonction de commande de maison intelligente de la montre intelligente après que la montre intelligente a établi une connexion sans fil avec la maison intelligente; et
commander la maison intelligente en utilisant la fonction de commande de maison intelligente, ce qui comprend en outre:
la reconnaissance de gestes de la main d'un utilisateur portant la montre intelligente; et
la commande de la maison intelligente par l'intermédiaire la connexion sans fil afin de commuter l'état de fonctionnement courant de la maison intelligente sur base des gestes de la main reconnus de l'utilisateur;
procédé dans lequel la détection quant à savoir si la montre intelligente a entré la portée de détection de la maison intelligente comprend: l'acquisition de la position de la maison intelligente et le marquage de la position acquise comme position de référence; l'obtention de la position de la montre intelligente; le calcul d'une distance entre la position de la montre intelligente et la position de référence et la détermination quant à savoir si la distance se trouve dans la portée de détection de la maison intelligente;
procédé dans lequel la reconnaissance des gestes de la main de l'utilisateur utilisant la montre intelligente comprend: l'échantillonnage d'un mouvement de bras de l'utilisateur afin d'obtenir une multitude d'informations d'état de mouvement, où la multitude d'informations d'état de mouvement comprend une accélération et une vitesse angulaire du mouvement de bras, l'obtention d'une pluralité de jeux de coordonnées tridimensionnelles 3D sur base de la multitude d'informations d'état de mouvement; l'obtention d'une valeur caractéristique courante du mouvement de bras sur base de la pluralité de jeux de coordonnées 3D; et la reconnaissance d'un geste de la main de l'utilisateur associé au mouvement de bras basé sur la valeur caractéristique courante; le procédé étant **caractérisé en ce que** la reconnaissance du geste de la main de l'utilisateur sur base de la valeur caractéristique courante comprend: la détection quant à savoir si la valeur caractéristique courante est supérieure à une première valeur seuil; lorsque la valeur caractéristique courante est inférieure ou égale à la première valeur seuil, détecter en outre si la valeur caractéristique courante est supérieure à une deuxième valeur seuil ; lorsque la valeur caractéristique courante est supérieure à la deuxième valeur seuil, déterminer que le geste de la main un mouvement d'agitation vers le haut; et lorsque la valeur caractéristique courante est inférieure ou égale à la deuxième valeur seuil, déterminer que le geste de la main est un mouvement de retournement de la main.

5. Procédé selon la revendication 4, comprenant en outre:
lorsque la valeur caractéristique courante est supérieure à la première valeur seuil, détecter si la valeur maximale parmi les jeux de coordonnées 3D est égale à une valeur prédéterminée; et lorsque la valeur maximale est égale à la valeur prédéterminée, déterminer que le geste de la main est un mouvement de secouage.

6. Procédé selon la revendication 4 ou 5, comprenant en outre la désactivation de la fonction de commande de maison intelligente de la montre intelligente lorsque la montre intelligente a quitté la portée de détection de la maison intelligente.

7. Procédé selon la revendication 4, dans lequel la position de la montre intelligente est obtenue par l'intermédiaire d'un module de positionnement GPS intégré dans la montre intelligente.
